# EUROPÄISCHE PATENTANMELDUNG

(11) **EP 3 915 679 A1**
(43) Veröffentlichungstag der Anmeldung: **01.12.2021**
(21) Anmeldenummer: 20176398.4
(22) Anmeldetag: 26.05.2020
(51) Int. Cl.: B01J 29/76, B01D 53/94, B01J 35/04, B01J 35/02, B01J 35/00, B01J 37/02, B01J 23/42, F01N 3/10, F01N 3/20, F01N 13/00

(54) **KATALYSATOR, KATALYSATORSYSTEM UND ABGASREINIGUNGSSYSTEM ZUR REDUZIERUNG VON AMMONIAK-EMISSIONEN**

(71) Anmelder: UMICORE AG & Co. KG, 63457 Hanau-Wolfgang (DE)
(72) Erfinder: COLOMBO, Massimo, 63450 Hanau (DE); PALM, David, 63694 Limeshain (DE)

(57) **Zusammenfassung**

Katalysator, umfassend
- ein Trägersubstrat der Länge L, das sich zwischen einem Ende X und einem Ende Y erstreckt
- Material a, enthaltend Platin auf einem Metalloxid und
- Material b, enthaltend eine für die SCR-Reaktion aktive Zusammensetzung und kein Edelmetall
wobei Material a und Material b unterschiedlich sind und der Katalysator beheizbar ist.

## Beschreibung

An die Reinigung der Abgase von Kraftfahrzeugen werden immer strengere Anforderungen gestellt. Während Partikel durch Filtration entfernt werden können, müssen unvollständig verbrannte Kohlenwasserstoffe (HC), Kohlenmonoxid (CO) und Stickoxide (NOₓ) zu Wasser, Kohlenstoffdioxid und Stickstoff umgesetzt werden. Dies erfolgt über katalytisch aktive Feststoffe, welche in der Regel als Beschichtung auf Trägersubstraten aufgebracht sind.

Als Trägersubstrate für diese Katalysatoren können sowohl Durchfluss- als auch Filtersubstrate verwendet werden. Durchflusssubstrate sind dem Fachmann bekannt und sind am Markt erhältlich. Sie bestehen beispielsweise aus Cordierit, Aluminiumtitanat oder Metallfolie.

Auch können sogenannte ,corrugated substrates' als Durchflusssubstrate verwendet werden. Diese sind dem Fachmann als Substrate aus gewellten Blättern, welche aus inerten Materialien bestehen, bekannt. Geeignete inerte Materialien sind zum Beispiel faserförmige Materialien mit einem durchschnittlichen Faserdurchmesser von 50 bis 250 µm und einer durchschnittlichen Faserlänge von 2 bis 30 mm. Bevorzugt sind faserförmige hitzebeständige Materialien aus Siliziumdioxid, insbesondere aus Glasfasern.

Zur Herstellung solcher Trägersubstrate werden zum Bespiel Blätter aus den genannten Fasermaterialien in bekannter Weise gewellt und die einzelnen gewellten Blätter zu einem zylindrischen monolithisch strukturierten Körper mit den Körper durchziehenden Kanälen geformt. Vorzugsweise wird durch Aufschichten einer Anzahl der gewellten Blätter zu parallelen Schichten mit unterschiedlicher Orientierung der Wellung zwischen den Schichten ein monolithisch strukturierter Körper mit einer kreuzweisen Wellungsstruktur geformt. In einer Ausführungsform können zwischen den gewellten Blättern glatte Blätter angeordnet sein.

Metallene Trägersubstrate bestehen in der Regel aus Strukturen aus gewellten Blechen, in die auch glatte Blechlagen eingearbeitet sein können. In der Regel werden diese Bleche gewickelt, so dass sich Kanalstrukturen bilden, deren Kanäle parallel verlaufen und sich von einem Ende des Substrates bis zum anderen Ende erstrecken. Die Bleche können durchgehend oder mit Löchern versehen sein, um den Gasaustausch zwischen den Kanälen zu ermöglichen. Zudem können diese Blechstrukturen so geformt sein, dass potentielle Partikelemissionen von der Struktur aufgefangen werden (sog. "offene" Filtersubstrate).

Trägersubstrate können auch elektrisch beheizbar ausgebildet sein, um schneller den Katalysator auf die gewünschte Betriebstemperatur zu bringen. In dem Fall wird entweder das beschichtete Trägersubstrat selbst als elektrischer Widerstand ausgebildet und, von elektrischem Strom durchflossen, geheizt, oder eine ebenso ausgebildete Scheibe wird dem beschichteten Trägersubstrat dem Abgasstrom aufwärts vorgeschaltet, so dass das Abgas erhitzt wird, bevor es durch das beschichtete Trägersubstrat strömt. Neuerdings wurde auch die induktive Beheizung eines Katalysators vorgeschlagen, die durch Einbringung von Partikeln aus Magnetwerkstoffen in die Beschichtung ermöglicht wird (WO2017/195107 A2).

Ein Wandflussfilter ist ein Tragkörper, der Kanäle der Länge L umfasst, die sich parallel zwischen einem ersten und einem zweiten Ende des Wandflussfilters erstrecken, die abwechselnd entweder am ersten oder am zweiten Ende verschlossen und die durch poröse Wände getrennt sind. Sie bestehen beispielsweise aus Silizium-Carbid, Aluminiumtitanat oder Cordierit.

Wandflussfilter weisen im unbeschichteten Zustand Porositäten von beispielsweise 30 bis 80%, insbesondere 50 bis 75% auf. Ihre durchschnittliche Porengröße beträgt im unbeschichteten Zustand beispielsweise 5 bis 30 µm.

In der Regel sind die Poren des Wandflussfilters sogenannte offene Poren, das heißt sie haben eine Verbindung zu den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Bei mager betriebenen Motoren ist der Umsatz von HC und CO über Oxidationskatalysatoren möglich, die Reduktion von NOx zu Stickstoff jedoch nicht. Hierzu ist entweder der Einsatz von NOx-Speicherkatalysatoren erforderlich, oder die Verwendung von sogenannten SCR-Katalysatoren zwecks selektiver katalytischer Reduktion (SCR). Während NOx-Speicherkatalysatoren periodisch regeneriert werden müssen, ist dies bei SCR-Katalysatoren nicht erforderlich.

Jedoch erfordert die Verwendung von SCR-Katalysatoren die Zudosierung von Reduktionsmittel. Gängige Praxis ist die Einspritzung einer wässrigen Lösung von Harnstoff in den Abgasstrang vor dem SCR-Katalysator. Bei Temperaturen oberhalb von 175°C bildet sich durch Hydrolyse Ammoniak (NH3) und CO₂:

(NH₂)₂CO + H₂O → 2 NH₃ + CO₂

Das gebildete Ammoniak wiederum dient als Reduktionsmittel für die Reduktion der Stickoxide über den SCR-Katalysator zu Stickstoff:

x NH₃ + y NOₓ (+ O₂) → ½ (x+y) N₂ + ^{3x}/₂ H₂O

Besonders schnell läuft die Reaktion bei einem Verhältnis NO/NO₂ ≈ 1 ab:

2 NH₃ + NO + NO₂ → 2 N₂ + 3 H₂O

Um einen möglichst vollständigen Umsatz der Stickoxide zu erreichen, wird der Harnstoff leicht überdosiert. Dies wiederum führt zu nicht umgesetztem Ammoniak im Abgas, was aufgrund seiner toxischen Wirkung unerwünscht ist und weshalb Ammoniakemissionen zunehmend in der Abgasgesetzgebung limitiert werden.

Aus diesem Grunde werden sogenannte "Ammoniak-Schlupf-Katalysatoren" (ASC) eingesetzt, um über den SCR-Katalysator nicht umgesetztes Ammoniak umzusetzen. Dabei wird das Ammoniak zu Stickstoff oxidiert:

4 NH₃ + 3 O₂ → 2 N₂ + 6 H₂O

Die für die Ammoniak-Oxidation aktiven Katalysatorbestandteile werden im Folgenden AMOX genannt.

Im Vergleich zu Palladium- und Rhodiumkatalysatoren zeigen Platinkatalysatoren die höchste Ammoniak-Oxidationsaktivität (Hansen T.K. (2017). Kgs. Lyngby: Technical Univ. of Denmark (DTU)).

Als Trägermaterial für das Edelmetall wird für die AMOX-Komponente in der Regel Aluminiumoxid (Al₂O₃) verwendet, da dies eine ausgezeichnete thermische Stabilität aufweist. Allerdings weisen herkömmliche Al₂O₃-geträgerte AMOX-Katalysatoren eine unzureichende Selektivität für die Oxidation zu Stickstoff (N₂) auf. Als unerwünschte Nebenreaktionen kommt es zur Oxidation von Ammoniak zu NOₓ und N₂O. Dies ist selbstverständlich kontraproduktiv für die Reduzierung des Stickoxids; zudem ist letzteres auch problematisch aufgrund seiner Wirkung als Treibhausgas.

Um die Selektivität zu erhöhen, wird obiger AMOX-Katalysator auch mit SCR-aktiven Katalysatorzusammensetzungen kombiniert (WO2016/205506 A1, US2008/292519 A1, US2014/212350 A1, US2014/0157763 A1, US2015/037233 A1). Diese SCR-aktiven Zusammensetzungen können auf die AMOX-Katalysatorschicht, mit dem AMOX-Katalysator gemischt in einer Schicht, oder sowohl gemischt in einer Schicht als auch zusätzlich in einer oberen Schicht aufgebracht werden. Diese Kombinationen erlauben, durch nachfolgende Reduktion von NOₓ die Selektivität des Katalysators zu N₂ zu erhöhen, und stellen als Gesamtheit den Ammoniak-Schlupf-Katalysator (ASC) dar.

Allerdings ist die N₂O-Reduktion über die SCR-aktiven Zusammensetzung vernachlässigbar gering. Die N₂O-Bildung muss deshalb möglichst gering gehalten werden.

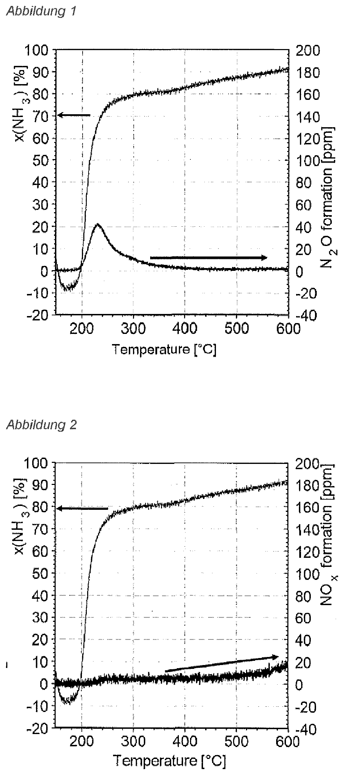

Abbildung 1 zeigt für einen typischen ASC den Ammoniak-Umsatz sowie die N₂O-Bildung als Funktion der Temperatur, wie sie auf einer Modellgasanlage gemessen wurde. Nachdem der Katalysator bei ca. 200°C seine Light-Off-Temperatur erreicht hat und während der Ammoniak-Umsatz bis 220°C bereits auf 50% ansteigt, steigt auch die N₂O-Bildung stark an. Die N₂O-Bildung erreicht ein Maximum bei 230°C, um mit weiter steigender Temperatur wieder zu sinken. Bei 300°C ist die N₂O-Bildung bereits auf ¼ der maximalen N₂O-Bildung bei 230°C gefallen, während der Ammoniak-Umsatz bei 300°C auf 80% gestiegen ist.

Abbildung 2 zeigt für die gleiche Messung den Ammoniak-Umsatz sowie die NOₓ-Bildung als Funktion der Temperatur. Unterhalb von 450°C bleibt die NOₓ-Bildung unterhalb von 10 ppm.

Hieraus wird deutlich, wie wichtig die Temperatur des ASC ist. Bei modernen Dieselmotoren ist die Aufheizrate, die durch das Abgas vorgegeben wird, recht gering, und die Abgastemperatur recht niedrig. Zudem ist der ASC in der Regel die letzte Komponente des Abgassystems. Somit verbleibt während der Aufheizzeit der Abgasanlage der ASC recht lange im Bereich hoher N₂O-Bildung.

Aufgabe der vorliegenden Erfindung ist deshalb, einen ASC bereitzustellen, der einerseits die N₂O-Bildung minimiert, und gleichzeitig einen hohen Ammoniakumsatz bietet.

Die Aufgabe wird gelöst durch einen ASC, der, direkt oder indirekt, elektrisch beheizbar gestaltet ist und über eine entsprechende Regelung damit innerhalb eines bevorzugten Temperaturfensters gehalten werden kann. Dieses Temperaturfenster kann aus dem Bereich von 300°C bis 450°C gewählt werden, da oberhalb von 300°C die N₂O-Bildung bereits gering und der Ammoniakumsatz hoch ist, aber unterhalb von 450°C die NOₓ-Bildung noch gering ist.

Im Folgenden wird die Erfindung in Detail beschrieben.

Die Erfindung betrifft einen Katalysator, umfassend
- ein Trägersubstrat der Länge L, das sich zwischen einem Ende X und einem Ende Y erstreckt
- Material a, enthaltend Platin auf Metalloxid und
- Material b, enthaltend eine für die SCR-Reaktion aktive Zusammensetzung
wobei Material a und Material b unterschiedlich sind und der Katalysator beheizbar ist.

Als Metalloxid für Material a kann Aluminiumoxid, Titanoxid, Ceroxid und/oder Zirkonoxid verwendet werden. Auch eine Mischung aus verschiedenen Metalloxiden oder ein oder mehrere Mischoxide können verwendet werden. Als eine Mischung aus Metalloxiden soll in dieser Erfindung ein Material verstanden werden, dass aus zwei oder mehr physikalisch gemischten Metalloxiden besteht. Als ein Mischoxid soll in dieser Erfindung ein Material verstanden werden, dessen Kristallgitter aus Sauerstoff und Kationen von zwei oder mehr Metallen besteht.

In einer Ausführungsvariante enthält der Katalysator außer Platin kein weiteres Edelmetall.

Bevorzugt liegt in Material a das Platin in Form von Partikeln auf dem Metalloxid vor mit einem über die Partikelanzahl gemittelten durchschnittlichen Partikeldurchmesser von 50 bis 200 nm, bevorzugt 80 bis 120 nm.

Als 'durchschnittlicher Partikeldurchmesser' gilt in dieser Erfindung der durchschnittliche Durchmesser der Pt-Kristallite, welcher aus Röntgenbeugungsaufnahmen anhand des [111]-Hauptreflexes bei ca. 39,8° 2Theta über die Peakbreite (Full Width at Half Maximum; FWHM) berechnet wird. Hierbei wird als Standard Silizium mit einem Peak bei 28,4° 2Theta und einer FWHM von 0,06° 2Theta verwendet.

Bevorzugt umfasst Material b einen Cu- und / oder Fe-ausgetauschten Zeolithen.

Zeolithe sind zwei- oder drei-dimensionale Strukturen, deren kleinste Substrukturen als SiO₄- und AlO₄-Tetraeder betrachtet werden können. Sie werden deshalb auch 'Silikoaluminate' genannt. Diese Tetraeder bilden größere Strukturen, wobei zwei jeweils über ein gemeinsames Sauerstoffatom miteinander verbunden sind. So können unterschiedlich große Ringstrukturen gebildet werden, wie z.B. Ringstrukturen aus 4, 6, oder sogar neun tetraedrisch koordinierten Si- oder Al-Atomen. Die unterschiedlichen Zeolithtypen werden oft über die größte Ringgröße definiert, da diese Größe bestimmt, welche Gastmoleküle die Zeolithstruktur penetrieren können. Üblicherweise wird zwischen großporigen Zeolithen mit bis zu 12 Tetraedern Ringgröße, mittelgroßporigen Zeolithen mit bis zu 10 Tetraedern Ringgröße und kleinporigen Zeolithen mit bis zu 8 Tetraedern Ringgröße unterschieden. Die Zeolithe werden durch die 'Structural Commission of the International Zeolite Association' in Strukturtypen eingeteilt, welche durch Codes aus drei Buchstaben angegeben werden. Bekannte kleinporige Zeolithe sind die Strukturtypen AEI, CHA (Chabasit), ERI (Erionit), LEV (Levyne) und KFI. Beispiele großporiger Zeolithe sind die des Strukturtyps Faujasit (FAU).

Für den erfindungsgemäßen Katalysator können sowohl groß- als auch mittelgroß- oder kleinporige Zeolithe verwendet werden. Beispiele geeigneter Zeolithe gehören den Strukturtypen ABW, AEI, AFX, BEA, CHA, DDR, ERI, ESV, FAU, FER, KFI, LEV, LTA, MER MFI, MWW, SOD oder STT an. Bevorzugt wird ein kleinporiger Zeolith des Strukturtyps AEI, AFX, CHA oder LEV. Besonders bevorzugt wird ein Zeolith des Strukturtyps CHA. Es wird ein Si : Al-Verhältnis von 2 bis 100, besonders bevorzugt von 5 : 50, und weiterhin bevorzugt von 10 : 40 verwendet.

Für die vorliegende Erfindung soll der Begriff 'Zeolith' auch nicht zeolithische Molekularsiebe beinhalten, welche gelegentlich als 'Zeolith-ähnliche Strukturen' bezeichnet werden. Es werden bevorzugt Molekularsiebe der oben genannten Strukturtypen verwendet. Beispiele beinhalten Silizium-Aluminium-Phosphat-Zeolithe, welche auch als SAPO bezeichnet werden, und Aluminium-Phosphat-Zeolithe, welche als AIPO bekannt sind.

In dieser Erfindung bezeichnet der Begriff 'nicht-zeolithisches Molekularsieb' ein über Ecken verbundenes Gitter aus tetraedrisch koordinierten Atomen, wobei zumindest ein Teil der tetraedrischen Gitterpositionen durch ein anderes Atom als Silizium oder Aluminium besetzt sind. Falls die Siliziumatome teilweise durch Phosphoratome ersetzt sind, handelt es sich um Silikoaluminophosphate, auch SAPO genannt. Sind alle Siliziumatome durch Phosphoratome ersetzt worden, handelt es sich um Aluminophosphate, auch AIPO genannt.

Ein "Zeotyp" beinhaltet jegliche Materialien basierend auf einer spezifischen Zeolithstruktur. Somit beinhaltet ein spezifischer Zeotyp zum Beispiel Silikoaluminate, SAPOs und AlPOs, die auf einer spezifischen Zeolithstruktur basieren. So gehören sowohl Chabasite (CHA), die Silikoaluminate SSZ-13, die Silikoaluminophosphate SAPO-34 und das Aluminophosphat MeAIPO-47 alle zum selben Zeotyp. Zeolithische und nicht-zeolithische Molekularsiebe des gleichen Zeotyps sind in der Datenbank der Internationalen Zeolithgesellschaft (International Zeolite Association; IZA) aufgeführt. Der Fachmann kann dieses Wissen und die IZA-Datenbank nutzen, ohne den Schutzbereich dieser Erfindung zu verlassen.

Die Beschichtung des Trägersubstrats kann nach den dem Fachmann geläufigen Methoden hergestellt werden, so etwa nach den üblichen Tauchbeschichtungsverfahren bzw. Pump- und Saug-Beschichtungsverfahren mit sich anschließender thermischer Nachbehandlung (Kalzination).

Bevorzugt ist Beschichtung A mit Material a als erste Schicht auf dem Trägersubstrat angeordnet, und Beschichtung B mit Material b als zweite Schicht auf Beschichtung A aufgebracht.

Bevorzugt erstrecken sich die Beschichtungen von Ende X bis Ende Y des Trägersubstrats. Die Beschichtung kann jedoch auch nur über 10% bis 80% der Gesamtlänge L des Trägersubstrats aufgetragen werden, um den Aufbau eines zonierten Katalysators zu ermöglichen. Auch können Material a und Material b gemeinsam in einer Beschichtung aufgetragen werden.

Zonierte Katalysatoren können unterschiedlich ausgebildet sein. Beispielsweise kann sich eine Zone, mit Material a versehen, von einem Ende (X) des Substrates her über die Länge L_{A} = 20% bis 80% der gesamten Substratlänge L erstrecken, während sich von dem anderen Ende (Y) des Substrates eine weitere Zone über L_{B} = 20% bis 80% der Substratlänge L erstreckt und Material b beinhaltet. Dabei können sich die Zonen überlappen, sich berühren, oder mit Lücke ausgeführt sein. Bei Überlappung kann die Zone der Länge L_{B} sich über die Zone L_{A} erstrecken und somit die nachfolgende Reduktion von NOₓ zu N₂, wie zuvor beschrieben, übernehmen. In letzterem Fall kann L_{B} auch identisch mit der Länge des Substrates gewählt werden.

In einer Ausführungsvariante ist das Trägersubstrat elektrisch beheizbar, d.h. das elektrisch beheizbare Trägersubstrat ist direkt mit Material a und/oder Material b beschichtet. Dabei ist das Trägersubstrat bevorzugt aus Metall, kann aber auch aus einem keramischen Träger mit Heizdraht bestehen.

In einer anderen Ausführungsvariante befindet sich an Ende A des Trägersubstrats ein elektrisch beheizbares, bevorzugt unbeschichtetes, Element. In diesem Fall wird das Substrat nicht direkt beheizt. Stattdessen wird das Abgas beim Durchtritt durch das beheizbare Element erhitzt, und die thermische Energie über das Abgas in die Reaktionszone des Katalysators eingebracht. Bei dieser Ausführungsvariante muss das Trägersubstrat deshalb nicht selbst elektrisch beheizbar sein. Es kann deshalb ein keramisches Trägersubstrat, wie es dem Fachmann geläufig ist, verwendet werden. Übliche Keramiken für Durchflusssubstrate sind Cordierit oder Aluminiumtitanat. Auch ein sogenanntes ,corrugated substrate' kann als Trägersubstrat Verwendung finden. Filtersubstrate können ebenfalls verwendet werden.

Dabei befindet sich das elektrisch beheizbare Element in einem Abstand kleiner als 10 cm von dem Trägersubstrat. In einer besonderen Ausführungsvariante ist das elektrisch beheizbare Element in direktem Kontakt mit dem Trägersubstrat. In diesem Fall ist das Trägersubstrat aus nichtleitender Keramik, um die Gefahr eines Kurzschlusses zu vermeiden.

Dem Fachmann ist bekannt, dass im Falle von Wandflussfiltern deren durchschnittliche Porengröße und die mittlere Teilchengröße der zu beschichtenden Materialien so aufeinander abgestimmt werden können, dass diese auf den porösen Wänden liegen, die die Ein- und Auslasskanäle des Wandflussfilters trennen (Aufwand-Beschichtung). Die mittlere Teilchengröße der zu beschichtenden Materialien kann aber auch so gewählt werden, dass sich diese in den porösen Wänden befinden, dass also eine Beschichtung der inneren Porenoberfläche erfolgt (Inwand-Beschichtung). In diesem Fall muss die mittlere Teilchengröße der zu beschichtenden Materialien klein genug sein, um in die Poren des Wandflussfilters einzudringen.

Ebenfalls kann die Beschichtung der Eingangskanäle mit einer SCR-aktiven Beschichtung, und die Beschichtung der Auslasskanäle mit einer ASC-Beschichtung erfolgen. Dabei kann zusätzlich eine Zonierung über die Länge des Substrates Verwendung finden.

Die Erfindung umfasst ebenfalls ein Abgasreinigungssystem, welches einen erfindungsgemäßen Katalysator bzw. ein erfindungsgemäßes Katalysatorsystem und einen SCR umfasst. Letzterer ist dem erfindungsgemäßen Katalysator bzw. Katalysatorsystem im Abgasstrom vorgeschaltet. Dabei kann der SCR zusammen mit dem erfindungsgemäßen Katalysator bzw. Katalysatorsystem in einem Gehäuse verbaut sein, oder auch in einem separaten Gehäuse angeordnet sein. In ersterem Fall kann bei geringem Abgasstrom und geringem Abstand noch eine Beheizung des SCR durch Strahlungswärme erfolgen, im letzteren Fall können der SCR und der ASC flexibler im Fahrzeug angeordnet werden.

Der dem ASC im Abgasstrom vorgeschaltete SCR-Katalysator kann prinzipiell aus allen für die SCR-Reaktion von Stickoxiden mit Ammoniak aktiven Katalysatoren ausgewählt werden, insbesondere aus solchen, die dem Fachmann auf dem Gebiet der Autoabgaskatalyse als gebräuchlich bekannt sind. Dies schließt Katalysatoren vom Mischoxid-Typ ebenso ein, wie Katalysatoren auf Basis von Zeolithen, insbesondere von Übergangsmetall-ausgetauschten Zeolithen.

Die Erfindung wird anhand von zwei Beispielen näher beschrieben:

### Beispiel 1:

Für die Herstellung des erfindungsgemäßen Katalysators wird ein handelsübliches elektrisch beheizbares Trägersubstratsystem verwendet, bestehend aus einem Metallsubstrat und einer auf einer Seite vorgesetzten Heizscheibe als elektrisch beheizbares Element. Die Heizscheibe wird mit einer Oxidationskatalysatorbeschichtung mit auf Aluminiumoxid geträgertem Platin versehen. Auf diese Beschichtung wird eine SCR-Beschichtung mit Kupfer-ausgetauschtem Zeolith des Strukturtyps CHA aufgebracht.

### Beispiel 2:

Für die Herstellung des erfindungsgemäßen Katalysators wird ein handelsübliches elektrisch beheizbares Trägersubstratsystem verwendet, bestehend aus einem Metallsubstrat und einer auf einer Seite vorgesetzten Heizscheibe. Das Metallsubstrat wird mit einer Oxidationskatalysatorbeschichtung mit auf Aluminiumoxid geträgerten Platin versehen. Auf diese Beschichtung wird eine SCR-Beschichtung mit Kupfer-ausgetauschtem Zeolith des Strukturtyps CHA aufgebracht.

## Patentansprüche

1. Katalysator, umfassend
- ein Trägersubstrat der Länge L, das sich zwischen einem Ende X und einem Ende Y erstreckt
- Material a, enthaltend Platin auf einem Metalloxid und
- Material b, enthaltend eine für die SCR-Reaktion aktive Zusammensetzung und kein Edelmetall
wobei Material a und Material b unterschiedlich sind und der Katalysator beheizbar ist.

2. Katalysator gemäß Anspruch 1, **dadurch gekennzeichnet, dass** der Katalysator kein Edelmetall außer Platin enthält.

3. Katalysator gemäß Anspruch 1 und/oder 2, **dadurch gekennzeichnet, dass** in Material a das Platin in Form von Partikeln auf dem Metalloxid vorliegt und eine über die Partikelanzahl gemittelte durchschnittliche Partikelgröße von 50 bis 200 nm, bevorzugt 80 bis 120 nm, aufweist.

4. Katalysator gemäß einem oder mehreren der Ansprüche 1 bis 3, **dadurch gekennzeichnet, dass** es sich bei Material b um einen Cu- und / oder Fe-ausgetauschten Zeolithen handelt.

5. Katalysator gemäß einem oder mehreren der Ansprüche 1 bis 4, **dadurch gekennzeichnet, dass** es sich bei Material b um einen Cu- und / oder Fe-ausgetauschten Zeolithen des Typs AEI, AFX, CHA oder LEV, bevorzugt CHA handelt.

6. Katalysator gemäß einem oder mehreren der Ansprüche 1 bis 5, **dadurch gekennzeichnet, dass** Beschichtung A mit Material a als erste Schicht auf dem Trägersubstrat angeordnet ist, und Beschichtung B mit Material b als zweite Schicht auf Beschichtung A aufgebracht ist.

7. Katalysator gemäß einem oder mehreren der Ansprüche 1 bis 6, **dadurch gekennzeichnet, dass** das Trägersubstrat elektrisch beheizbar ist.

8. Katalysatorsystem umfassend einen Katalysator gemäß einem oder mehreren der Ansprüche 1 bis 6, **dadurch gekennzeichnet, dass** sich an Ende X des Trägersubstrats ein elektrisch beheizbares Element befindet.

9. Katalysatorsystem gemäß Anspruch 7, **dadurch gekennzeichnet, dass** das elektrisch beheizbare Element in einem Abstand kleiner als 10 cm von dem Trägersubstrat entfernt ist.

10. Katalysatorsystem gemäß Anspruch 8 und / oder 9, **dadurch gekennzeichnet, dass** das elektrisch beheizbare Element in direktem Kontakt mit dem Trägersubstrat ist.

11. Abgasreinigungssystem, **dadurch gekennzeichnet, dass** es einen Katalysator bzw. ein Katalysatorsystem gemäß einem oder mehreren der Ansprüche 1 bis 10 und einen SCR-Katalysator umfasst.

12. Abgasreinigungssystem gemäß Anspruch 11, **dadurch gekennzeichnet, dass** der Katalysator bzw. das Katalysatorsystem gemäß einem oder mehreren der Ansprüche 1 bis 10 und der SCR-Katalysator in einem Gehäuse angeordnet sind.

13. Abgasreinigungssystem gemäß Anspruch 10, **dadurch gekennzeichnet, dass** der Katalysator bzw. das Katalysatorsystem gemäß einem oder mehreren der Ansprüche 1 bis 10 und der SCR-Katalysator in zwei getrennten Gehäusen angeordnet sind.
